(19) Europäisches Patentamt
European Patent Office
Office européen des brevets

(11) **EP 1 511 977 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(21) Anmeldenummer: **03740227.8**

(22) Anmeldetag: **12.06.2003**

(51) Int Cl.:
***G01G 23/01*** *(2006.01)*

(86) Internationale Anmeldenummer:
**PCT/EP2003/006143**

(87) Internationale Veröffentlichungsnummer:
**WO 2003/106939 (24.12.2003 Gazette 2003/52)**

(54) **VERFAHREN ZUM AUSTAUSCH DIGITALER WÄGEZELLEN**

METHOD FOR REPLACING DIGITAL LOAD CELLS

PROCEDE POUR REMPLACER DES CELLULES DE PESEE NUMERIQUES

(84) Benannte Vertragsstaaten:
**AT BE BG CH CY CZ DK EE ES FI FR GB GR HU IE IT LI LU MC NL PT RO SE SI SK TR**

(30) Priorität: **13.06.2002 DE 10227121**

(43) Veröffentlichungstag der Anmeldung:
**09.03.2005 Patentblatt 2005/10**

(73) Patentinhaber: **Bizerba GmbH & Co. KG**
**D-72336 Balingen (DE)**

(72) Erfinder: **PFEIFFER, Gebhard**
**78570 Mühlheim (DE)**

(74) Vertreter: **Wössner, Gottfried**
**HOEGER, STELLRECHT & PARTNER**
**Patentanwälte**
**Uhlandstrasse 14c**
**70182 Stuttgart (DE)**

(56) Entgegenhaltungen:
**EP-A- 0 319 202          DE-A- 10 041 251**

**Beschreibung**

Die Erfindung betrifft ein Verfahren zum Austausch von digitalen Wägezellen in einer Wägeanordnung.

Häufig umfasst eine Wägeanordnung einen Lastaufnehmer, welcher der Auflage von Gegenständen dient, deren Gewicht erfasst werden soll. Einem solchen Lastaufnehmer sind mehrere Wägezellen zugeordnet. In der Regel sind es 4 Wägezellen, da in jeder Ecke des meist rechteckigen Lastaufnehmers eine Wägezelle montiert ist. Sind dies digitale Wägezellen, so sind diese schon vor dem Einbau, also bei der Herstellung, in einem automatischen Prozess normiert, linearisiert und temperaturkompensiert. Nach Durchlaufen dieses Prozesses liefern die digitalen Wägezellen über den vorgesehenen Wägebereich beispielsweise einen Zählerstand von 0 bis 240000 n-Digit. Beim Einbau in eine Wägeanordnung mit Lastaufnehmer werden die digitalen Wägezellen über einen Messbus miteinander verbunden. Der Messbus ist ferner an eine Steuereinheit, z. B. ein Terminal, angeschlossen, welches die digitalen Wägezellen bzw. die Wägeanordnung steuert und überwacht.

Das Terminal kann eine Auswerteelektronik oder eine Datenverarbeitungsvorrichtung (PC) sein. Die Wägeanordnung muss nun bei der ersten Inbetriebnahme zuerst am Terminal angeschlossen und geeicht werden. Hierzu wird ein sogenannter Basisabgleich durchgeführt um die Nennlast der Waage für den Lastaufnehmer festzulegen. Bei diesem Abgleich wird ein "Rohzählerstand" (Summe der Zählerstände der einzelnen digitalen Wägezellen) ermittelt und auf einen Zählerstand von beispielsweise 120000 n-Digit für die Waage normiert. Während des Abgleichs wird in der Reihenfolge der Eckenbelastung die digitale Wägezelle der jeweiligen Ecke an Hand der Busadresse zugeordnet, um eine spätere eindeutige Identifizierung der digitalen Wägezelle bei einem eventuell notwendigen Tausch zu ermöglichen.

Nach dem Tausch einer defekten digitalen Wägezelle musste bisher erneut der komplette Basisabgleich, sprich Eichung durchgeführt werden.

Aus der DE 100 41 251 A1 ist bekannt, dass ein eichfähiges Wägesystem mit einer Datenverarbeitungsvorrichtung erreicht wird, in dem mindestens eine digitale Wägezelle zur Speicherung der Wägezellenparameter und zusätzlicher Systemparameter dient. Bei jedem Wägevorgang werden diese Parameter kodiert mit den Gewichtsdaten an die Datenverarbeitungsvorrichtung gesendet und dort mit den ebenfalls gespeicherten Parametern verglichen. Wird bei diesem Vergleichsvorgang eine Abweichung festgestellt, so wird der Wägevorgang abgebrochen oder zumindest eine Fehlermeldung angezeigt. Hier kann die Datenverarbeitungsvorrichtung ausgetauscht werden, ohne dass das Wägesystem neu geeicht werden müsste. Es kann auch ein kompletter Lastaufnehmer mit allen Wägezellen an der Datenverarbeitungsvorrichtung ausgetauscht werden, ohne dass das Wägesystem neu geeicht werden muss, da der Lastaufnehmer als Einheit im Prinzip geeicht werden kann und alle Parameter der Eichung in den Speichern der digitalen Wägezelle gespeichert sind. Die Parameter können von der Datenverarbeitungsvorrichtung nach dem Tausch des Lastaufnehmers dann zurück gelesen werden. Einen Vorschlag, der es erlaubt, nur einzelne der digitalen Wägezellen des Lastaufnehmers zu tauschen ist jedoch in dieser Druckschrift nicht enthalten.

Es ist jedoch bei großen und / oder im Boden eingebauten Wägeanordnungen mit Lastaufnehmern nicht immer möglich, den Lastaufnehmer komplett zu tauschen. Das Auswechseln einer oder mehrerer digitalen Wägezellen eines Lastaufnehmers hat bisher immer einen neuen Eichvorgang bedeutet.

Ähnliches gilt für Wägeanordnungen, die im Wesentlichen aus einer Wägezellenanordnung bestehen und ohne eigentlichen Lastaufnehmer auskommen, beispielsweise Wägeanordnungen für Silos, bei welchen in jedem Standbein des Silos eine Wägezelle eingebaut ist.

Der Erfindung liegt die Aufgabe zugrunde, ein Verfahren vorzuschlagen, mit dem eine oder mehrere digitale Wägezellen eines Lastaufnehmers austauschbar sind, ohne dass die Wägeanordnung neu geeicht werden muss.

Die Aufgabe wird erfindungsgemäß durch die im Hauptanspruch genannten Merkmale gelöst. Weitere vorteilhafte Ausgestaltungen ergeben sich aus den abhängigen Ansprüchen.

Bei dem erfindungsgemäßen Verfahren werden die bei der Eichung in den digitalen Wägezellen gespeicherten Parameter, vorzugsweise vor dem Austausch einer digitalen Wägezelle, ins Terminal ausgelesen. Bei einem Lastaufnehmer oder einer Wägezellenanordnung mit üblicherweise 4 digitalen Wägezellen können maximal 3 gleichzeitig getauscht werden. Da erfindungsgemäß in jeder digitalen Wägezelle die Parameter aller in der Wägezellenanordnung vorhandenen Zellen gespeichert sind, reicht es aus, wenn eine digitale Wägezelle nicht getauscht wird. Nach dem Austausch der digitalen Wägezellen werden die Parameter der neuen digitalen Wägezellen mit den Parametern der alten digitalen Wägezellen abgeglichen. Das Ergebnis darf nur innerhalb ganz bestimmter Toleranzen maximal abweichen. Ansonsten erhält der Bediener Fehlerhinweise mit Tipps zur Behebung des Fehlers. Erst wenn alle Prüfschritte mit positivem Ergebnis durchlaufen wurden werden die neuen Parameter akzeptiert und das Wägesystem ist wieder betriebsbereit und darf weiterhin als geeicht gelten.

Die mit der Erfindung erzielten Vorteile bestehen insbesondere in einer Kosten- und Zeitersparnis durch Beibehalten der Eichgültigkeit. Dies bedeutet, es ist nach einem Wägezellentausch keine Nacheichung mehr erforderlich.

Außerdem wird der Austausch insgesamt vereinfacht. Da bei einer Nacheichung der Bedienungsablauf komplexer als bei dem neuen Verfahren ist, können bei einer Nacheichung auch eher Fehler auftreten.

Bei einer Nacheichung nüssen nacheinander Kalibriergewichte in bestimmten Belastungsstufen auf den Lastaufnehmer aufgestellt werden. Dies bedeutet bei Lastaufnehmern mit großem Wägebereich auch sehr große Kalibriergewichte. Diese großen Gewichte sind nur mit zusätzlichen Hilfsmitteln wie zum Beispiel Kran, Hubwagen oder Gabelstapler zu bewegen. Das Vorhalten solcher Hilfsmittel sowie der teuren Kalibriergewichte ist nun überflüssig.

Bei einer Fahrzeugbodenwaage für Lastkraftwagen bedeutet eine Nacheichung sogar den Einsatz eines speziellen Eichfahrzeugs. Da solche speziellen Eichfahrzeuge oft ein weites Einsatzgebiet haben, ist der Anfahrweg oft sehr lang und die Einsatzkosten entsprechend hoch. Außerdem sind diese Eichfahrzeuge in der Regel nicht sofort verfügbar. Der Einsatz muss sogar Tage im voraus geplant werden. Fällt also eine Fahrzeugbodenwaage, zum Beispiel durch Blitzschlag aus, so bedeutete dies bisher oft einen Ausfall des Wägebetriebs von mehreren Tagen.

Eine Behälterwaage ist ein Silo, ein Tank oder ein Mischer, welcher meistens auf 3 Füßen steht. In jedem der Füße ist eine Wägezelle installiert. Sie bilden zusammen eine Wägezellenanordnung. Eine Eichung einer Behälterwaage ist nur mit dem Einbau eines geeichten Durchflussmessers in eine Wasserzuleitung möglich. Über diesen geeichten Durchflussmesser wird dann eine genaue Menge Wasser in den Behälter gefüllt. Nach der Eichung wird das Wasser oft als Abwasser entsorgt. Eventuell muss der Behälter danach sogar noch getrocknet werden, bevor er mit dem eigentlichen Produkt wieder befüllt werden kann. Auch hier bringt das neue Verfahren also eine wesentliche Vereinfachung mit sich.

Diese und weitere Vorteile der Erfindung werden im folgenden anhand der folgenden Beschreibung von Beispielen noch näher erläutert.

Um Manipulationen an einer geeichten Waage mit digitalen Wägezellen vorzubeugen, muss sich der berechtigte Servicetechniker vor der Initialisierung eines Austauschs einer digitalen Wägezelle über einen Sicherheitsmechanismus identifizieren (Passwort, etc.).

Bei falscher Identifizierung wird die Austauschfunktion gesperrt und beendet.

Bei korrekter Identifikation bereitet der beauftragte Servicetechniker den Austausch einer oder mehrerer digitaler Wägezellen vor. Bei einem Lastaufnehmer oder einer Wägezellenanordnung mit 4 digitalen Wägezellen können maximal 3 digitale Wägezellen in einem Vorgang getauscht werden.

Der Bediener führt folgende Schritte aus:

    o Festlegung, welche digitale Wägezelle(n) getauscht werden soll(en)

    o Identifizierung (Seriennummer) der neuen digitalen Wägezelle(n)

Bei der ursprünglichen Eichung, also dem Abgleich der Wägeanordnung (Lastaufnehmer) werden in jeder digitalen Wägezelle eichrelevante Daten als Parametersatz gespeichert, die zur Prüfung beim Austausch einer Zelle herangezogen werden.

- Waagendaten der gesamten Wägeanordnung (Waage)

- Abgleichdaten der gesamten Wägeanordnung

- Eckfaktoren für jede Ecke (einzelne Wägezelle)

- Kontrollprüfwert bei Eckbelastung mit mindestens 33% der Waagenhöchstlast

- interne Wägezelleninformationen (Zellentyp, Klassifizierung, usw.)

- Daten der Prüfkurve der Wägeanordnung

Unter Waagendaten sind zu verstehen:

- Wägebereich der Waage (z.B. 600 kg)

- Anzeigeschrittigkeit (z.B. 200 g)

- Minimallast (z.B. 20 x Anzeigeschrittigkeit = 4 kg)

- Festlegung, ob es sich um eine Ein-, Zwei- oder Dreiteilungswaage handelt mit einem, zwei bzw. drei Wägebereichen mit separat definierter Anzeigeschrittigkeit (z.B. 100 g bis 100 kg und 200 g über 100 kg bei einer Zweiteilungswaage)

- Tarabereich (z.B. 50 % des Wägebereichs)

- Nullstellbereich (z.B. - 1 % bis + 4 % des Wägebereichs).

Unter Abgleichdaten einer Wägeanordnung versteht man die Zählerstände der Kalibrierdaten bei der Nullgrenze, bei Volllast und bei einer Teillast.

Bei einem bevorzugten erfindungsgemäßen Verfahren werden in einem ersten Schritt der eichrelevante Parametersatz der auszutauschenden Wägezelle, dessen Daten später zur Überprüfung der Waage benötigt werden, extern zwischengespeichert. Daraufhin wird die Waage spannungsfrei geschaltet und die angegebenen und registrierten digitalen Wägezellen ausgetauscht.

Die Parametersatzdaten werden bevorzugt aus einer in der Anordnung verbleibenden Wägezelle in die Steuereinheit ausgelesen. Dies hat den Vorteil, dass das Verfahren auch dann noch durchgeführt werden kann, wenn die auszutauschende Wägezelle derart defekt ist, dass Daten aus der Wägezelle nicht mehr auslesbar sind.

Nach dem Tausch wird die Waage wieder eingeschaltet. Dabei werden von der Steuereinheit folgende Überprüfungen durchgeführt:

• Damit nicht eine Wägezelle getauscht wird, die bei Beginn der Servicesequenz nicht angegeben wurde, wird die Adresse ($\cong$ Position) der getauschten Wägezelle(n) und die interne eindeutige Seriennummer überprüft.

• Der Wägezellentyp und die Klassifizierung der neuen Wägezelle(n) muss kompatibel zu(r) vorhandenen Wägezelle(n) sein. Dazu werden die Typ- und Klassifizierungsdaten der neuen Wägezelle(n) mit den zwischengespeicherten Daten verglichen. Die neue Wägezelle muss in der Klassifizierung gleich oder besser sein.

• Sind diese Überprüfungen negativ, wird eine Fehlermeldung ausgegeben und die Funktion abgebrochen.

• War das Ergebnis der bisherigen Überprüfungen positiv, werden die extern zwischengespeicherten Daten in die neu eingewechselten Wägezelle(n) zurückgespeichert.

Nachdem die Daten geladen sind, wird kontrolliert, ob alle digitalen Wägezellen eine etwa gleichmäßige Auslastung (im unbelasteten Zustand) haben. Die Abweichung der gemessenen Zählerwerte darf maximal $\pm 10\%$ der Summe aller Zellen-Zählerwerte betragen. Ist die Abweichung größer, erhält der Bediener eine Meldung, dass die Ecken durch Einstellen der Drehfüße ausgeglichen werden sollen.

*Prüfung der Toleranzen für Eckenwerte ohne Belastung:*

Summe: $\quad E_{\Sigma Z} = \Sigma(E_{Z1}, E_{Z2}, E_{Z3}, E_{Z4})$

Mittelwert: $\quad E_Z = E_{\Sigma Z} / 4$

Zulässige Toleranz (10%): $\quad \Delta E_Z = E_{\Sigma Z} * 0{,}10$

Der Parameter Z steht für die Wägezellen Z1, ........ Zm

zulässige Zählerwerte: $\quad E_{Zx\,min} = E_Z - \Delta E_Z$

$\quad E_{Zx\,max} = E_Z + \Delta E_Z$

*Beispiel:*

$E_{Z1} = 14307$
$E_{Z2} = 14342$
$E_{Z3} = 13954$
$E_{Z4} = 13833$

$$E_{\Sigma Z} = 14307 + 14342 + 13954 + 13833$$

$E_{\Sigma Z} = 56436$
$E_Z = 56436 / 4$
$E_Z = 14109$

$\Delta E_Z = 56436 * 0{,}10 = 5643{,}6$
$\Delta E_Z = 5644 \quad$ (Wert ganzzahlig aufgerundet)

*zulässige Eckenwerte:*

$E_{Zx\,min} = 14109 - 5644 \qquad E_{Zx\,max} = 14109 + 5644$

$\underline{E_{Zx\,min} = 8465} \qquad \underline{E_{Zx\,max} = 19753}$

Die 4 digitalen Wägezellen in diesem Beispiel liegen alle innerhalb der zulässigen Toleranz!

• Als nächstes werden die Daten des Nullpunktes überprüft. Dabei werden die gespeicherten Zählerstandsdaten mit den aktuellen Zählerstandsdaten verglichen. Bei einer 3000d-Waage darf der gemessene normierte Zählerwert maximal um $\pm 20$ $d_d$ abweichen.

Bei einer 6000d-Waage darf der gemessene normierte Zählerwert maximal um $\pm 10$ $d_d$ abweichen.

*Prüfung der Toleranzen für Nullwerte der Waage (unbelasteter Zustand):*

| | |
|---|---|
| gespeicherter Wert: | $N_{Zs}$ |
| gemessener Wert: | $N_{Zm}$ |
| zulässige Toleranz: | $\Delta N_{Zs} = \pm 20$ oder $\pm 10$ |
| zulässige Zählerwerte: | $N_{Zm\ min} = N_{Zs} - \Delta N_{Zs}$ |
| | $N_{Zm\ max} = N_{Zs} + \Delta N_{Zs}$ |

**_Beispiel:_**

$N_{Zs} = 0$
$N_{Zm} = 14$

*zulässige Nullwerte:*

$N_{Zm\ min} = 0 - 20$    $N_{Zm\ max} = 0 + 20$
$\underline{\mathbf{N_{Zm\ min} = -20}}$    $\underline{\mathbf{N_{Zm\ max} = 20}}$

Der Nullwert in diesem Beispiel liegt innerhalb der zulässigen Toleranz! Ist die Abweichung größer, wird dies über eine Fehlermeldung dem Bediener mitgeteilt. In der Konsequenz muss die Wägezelle erneut getauscht werden.

• Im folgenden Prüfschritt wird kontrolliert, ob die Waage in der Belastungssituation korrekt arbeitet.

Dazu muss ein beliebiges bekanntes Gewicht auf die Waage (Lastaufnehmer) abwechselnd in jedem Eckbereich positioniert werden, das mindestens 33% der Höchstlast der Waage entsprechen muss.

*Prüfung der Waage bei exzentrischer Belastung*

Jeder Eckbereich der Waage wird gemäß EN 45501 mit ca. 1/3 der maximal zulässigen Last geprüft. Hierbei kann auch eine Ersatzlast verwendet werden.

Bei dieser Prüfung wird für jeden Eckbereich der Zählerstand bei Null und bei der Prüflast aller 4 digitalen Wägezellen aufgenommen. Damit wird die Zählerstandsdifferenz für die vier Eckbereiche berechnet. Aus diesen Werten wird über ein lineares Gleichungssystem der Eckfaktor jedes Eckbereiches berechnet. Dieser Faktor spiegelt die Belastungssituation der Eckbereiche wieder.

*Formeln zur Berechnung der Eckfaktoren*

Berechnung der Hubwerte $\Delta \mathbf{H_{xy}}$

$$\Delta H_{xy} = L_{xy} - N_{xy}$$

x = Nummer der Wägezelle

y = Nummer der Messung

L = Zählerstand bei 1/3 Last

N = Zählerstand bei Nulllast

$Ef_y$ : Eckfaktor

Berechnung der Bezugssummenwerte B

$$B = (\ \Sigma\ (\ \Delta H_{11} \ldots \Delta H_{41}) + \Sigma\ (\ \Delta H_{12} \ldots \Delta H_{42}) + \Sigma\ (\ \Delta H_{13} \ldots \Delta H_{43}) + \Sigma\ (\ \Delta H_{13} \ldots \Delta H_{44})) / 4$$

Lineares Gleichungssystem:

$$1) \quad Ef_1*(\Delta H_{11}) + Ef_2*(\Delta H_{21}) + Ef_3*(\Delta H_{31}) + Ef_4*(\Delta H_{41}) = B$$

$$(2) \quad Ef_1*(\Delta H_{12}) + Ef_2*(\Delta H_{22}) + Ef_3*(\Delta H_{32}) + Ef_4*(\Delta H_{42}) = B$$

$$(3) \quad Ef_1*(\Delta H_{13}) + Ef_2*(\Delta H_{23}) + Ef_3*(\Delta H_{33}) + Ef_4*(\Delta H_{43}) = B$$

$$(4) \quad Ef_1*(\Delta H_{14}) + Ef_2*(\Delta H_{24}) + Ef_3*(\Delta H_{34}) + Ef_4*(\Delta H_{44}) = B$$

*Toleranzen der Eckfaktoren der Waage:*

Obere Grenze: $G_{oben} = 1,01$
untere Grenze: $G_{unten} = 0,99$
Eckfaktoren: $Ef_1, Ef_2, Ef_3, Ef_4$

*Für die Eckfaktoren gilt folgende Bedingung:*

$$G_{unten} \geq Ef_x \leq G_{oben}$$

$$x = 1 \ldots 4$$

Beispiel für berechnete Eckfaktoren:

$Ef_1 = 1,00045673$
$Ef_2 = 0,99907987$
$Ef_3 = 1,00126548$
$Ef_4 = 0,99879485$

*zulässige Eckfaktorwerte:*

$$Ef_{1\ldots4min} = 0,990000 \qquad Ef_{1\ldots4max} = 1,0100000$$

Die aus der Belastungsprüfung berechneten Eckfaktoren in diesem Beispiel liegen alle innerhalb der zulässigen Toleranz! Da alle Werte innerhalb der zulässigen Toleranz liegen, bleibt die Eichgültigkeit der Waage unverändert erhalten.

Ist die Abweichung nur eines Eckfaktors größer als die zulässige Toleranz, wird eine Fehlermeldung ausgegeben und die Funktion abgebrochen. Die Servicefunktion muss neu gestartet werden oder die Waage ist nicht mehr im eichpflichtigen Verkehr verwendbar.

Die Servicefunktion kann beliebig wiederholt werden, da die Urspungsdaten bei auftretenden Fehlern unverändert bleiben.

Kann auch nach mehrmaliger Wiederholung kein positives Ergebnis erreicht werden, muss die Waage neu kalibriert werden.

- Als letzter Prüfschritt wird das auf der Waage positionierte *Gewicht* mit den Daten der hinterlegten *Prüfkurve* verglichen.
  Die Prüfkurve wird bei der ursprünglichen Eichung erstellt, wobei in mehreren Schritten Gewichte über einen Großteil des Wägebereichs auf den Lastaufnehmer aufgesetzt und die zugehörigen Zählerstände bestimmt werden.

- Sind alle Prüfschritte mit positivem Ergebnis durchlaufen, wird in jeder ausgetauschten digitalen Wägezelle eine eindeutig zugeordnete Kenn-Identifikationsnummer (Kenn-ID) eingetragen.

- Der Serviceeingriff wird im Servicelogbuch dokumentiert. Hierzu werden Datum, Uhrzeit, Art der Servicefunktion und Zusatzinformationen zu jedem Serviceeingriff hinterlegt.
  Das Servicelogbuch wird in jeder digitalen Wägezelle und im geschützten Speicherbereich des jeweiligen Gerätes gespeichert.

*Sicherung der Waagenparameter*

Die Waagenparameter sind im jeweiligen EEPROM des in der digitalen Wägezelle eingebauten Analog-Digitalwandlers gespeichert.
Der Zugriff auf die Waagenparameter ist nur über Sicherungsverletzung (Hard- oder Softwaresicherung) im Auswertegerät, oder über das Softwaremodul möglich.
Bei einem Zugriff über das Softwaremodul können die gespeicherten Daten vom Bediener nicht verändert werden. Nach erfolgreichem Abschluss aller Prüfungen werden die notwendigen Daten automatisch im Hintergrund durch die Software geändert.
Eine Änderung von Waagenparametern durch den Bediener ist nicht möglich.

*Abschluss der Serviceprozedur*

Für den Abschluss der Serviceprozedur werden unterschiedliche Möglichkeiten angeboten.

- Verfahrensende mit Rückkehr in den Wiegemodus

- Verfahrensende mit Abdruck der neuen Zelldaten und anschließender Rückkehr in den Wiegemodus

- Verfahrensende mit Ausgabe der neuen Zellendaten auf eine Schnittstelle und anschließender Rückkehr in den Wiegemodus

**Patentansprüche**

1. Verfahren zum Austauschen von Wägezellen in einer geeichten Wägeanordnung mit mehreren digitalen Wägezellen, wobei die Wägezellen mit einer Steuereinheit über ein Bussystem verbunden sind, wobei die digitalen Wägezellen Gewichtswerte in Form von Zählerwerten zur Verfügung stellen und wobei jede Wägezelle einen Satz eichrelevanter Wägezellenparameter pro Wägezelle der Wägeanordnung in einem Parameterspeicher abgelegt aufweist, **dadurch gekennzeichnet, dass**
bei einem Austausch mindestens eine der bisherigen Wägezellen in der Wägeanordnung verbleibt und dass nach dem erfolgten Austausch über die zentrale Steuereinheit anhand der Daten der ausgetauschten Wägezelle, die die Steuereinheit von der in der Anordnung verbliebenen Wägezelle erhält, für die eingewechselte Wägezelle einen neuen Parametersatz ermittelt und in den Parameterspeichern aller Wägezellen abgelegt wird.

2. Verfahren nach Anspruch 1, **dadurch gekennzeichnet, dass** der Satz eichrelevanter Wägezellenparameter mindestens Waagendaten, Abgleichdaten, Eckfaktoren, Kontrollprüfwert, Wägezellencharakterisierung und Servicezugriffsdaten umfasst.

3. Verfahren nach Anspruch 2, **dadurch gekennzeichnet, dass** der Satz eichrelevanter Wägezellenparameter zusätzlich Daten der Prüfkurve der Wägezellenanordnung und/oder einen Analog-Digitalwandler-Identifizierungscode für die Systemzuordnung umfasst.

4. Verfahren nach einem der voranstehenden Ansprüche, **dadurch gekennzeichnet, dass** die eingewechselte Wägezelle anhand ihrer internen Seriennummer auf die Zulässigkeit in der geeichten Wägeanordnung geprüft wird.

**5.** Verfahren nach einem der voranstehenden Ansprüche, **dadurch gekennzeichnet, dass** die eingewechselte Wägezelle auf ihren Zählerwert im unbelasteten Zustand der Wägeanordnung geprüft wird, wobei, falls der Zählerwert vom Mittelwert aller Zählerwerte der Wägezellen der Wägeanordnung um nicht mehr als $\pm$ 10 % der Summe aller Wägezellen-Zählerwerte abweicht, eine Justierung der Lastverteilung auf die Gesamtheit der Wägezellen veranlasst wird.

**6.** Verfahren nach Anspruch 5, **dadurch gekennzeichnet, dass** die eingewechselte Wägezelle in einem darauf folgenden Schritt im unbelasteten Zustand der Wägeanordnung bei einer Nullwertmessung auf die Einhaltung einer vorgegebenen Toleranz geprüft wird.

**7.** Verfahren nach Anspruch 6, **dadurch gekennzeichnet, dass** in einem auf die Nullwertmessung folgenden Schritt die eingewechselte Wägezelle auf die Einhaltung einer vorgegebenen Toleranz in einem ersten Belastungszustand geprüft wird.

**8.** Verfahren nach Anspruch 7, **dadurch gekennzeichnet, dass** in der Belastungszustandsprüfung eine Last von mindestens 33 % der Höchstlast der Wägeanordnung verwendet wird.

**9.** Verfahren nach Anspruch 8, **dadurch gekennzeichnet, dass** in den Wägezellen eine Prüfkurve der Wägezellenanordnung abgespeichert ist und dass bei der Belastungszustandsprüfung der erhaltene Wert der eingewechselten Wägezelle mit der Prüfkurve der ausgewechselten Wägezelle verglichen und überprüft wird, ob sich eine Übereinstimmung innerhalb vorgegebener Toleranzgrenzen ergibt.

**10.** Verfahren nach einem der voranstehenden Ansprüche, **dadurch gekennzeichnet, dass** der Wägezellenparametersatz einer auszutauschenden Wägezelle vor dem Austausch derselben aus einer in der Anordnung verbleibenden Wägezelle in die Steuereinheit ausgelesen wird.

**Claims**

**1.** Method for replacing load cells in a calibrated weighing system having a number of digital load cells, the load cells being connected to a control unit via a bus system, the digital load cells providing weight values in the form of counter values and each load cell having a set of load cell parameters relevant to calibration for each load cell of the weighing system, stored in a parameter memory, **characterized in that**, in the event of a replacement, at least one of the previous load cells remains in the weighing system and **in that**, once the replacement has taken place, a new set of parameters is determined for the load cell used as the replacement via the central control unit on the basis of the data of the replaced load cell, which the control unit receives from the load cell remaining in the system, and is stored in the parameter memories of all the load cells.

**2.** Method according to Claim 1, **characterized in that** the set of load cell parameters relevant to calibration comprises at least data of the weighing apparatus, adjustment data, corner factors, a control test value, load cell characterization and service access data.

**3.** Method according to Claim 2, **characterized in that** the set of load cell parameters relevant to calibration additionally comprises data of the test curve of the load cell system and/or an analog-digital converter identification code for the system assignment.

**4.** Method according to one of the preceding claims, **characterized in that** the load cell used as a replacement is tested on the basis of its internal serial number for the permissibility of the calibrated weighing system.

**5.** Method according to one of the preceding claims, **characterized in that** the load cell used as a replacement is tested for its counter value in the unloaded state of the weighing system, adjustment of the load distribution over the entirety of the load cells being initiated if the counter value deviates from the mean value of all the counter values of the load cells of the weighing system by no more than $\pm$10% of the sum of all the load cell counter values.

**6.** Method according to Claim 5, **characterized in that**, in a step which then follows, the load cell used as a replacement is tested in a zero value measurement for maintaining a predetermined tolerance in the unloaded state of the weighing system.

**7.** Method according to Claim 6, **characterized in that**, in a step following the zero value measurement, the load cell used as a replacement is tested for maintaining a predetermined tolerance in a first loading state.

**8.** Method according to Claim 7, **characterized in that**, in the loading state test, a load of at least 33% of the maximum load of the weighing system is used.

**9.** Method according to Claim 8, **characterized in that** a test curve of the load cell system is stored in the load cells and **in that**, in the loading state testing, the value obtained for the load cell used as a replacement is compared with the test curve of the replaced load cell and it is checked whether they coincide within predetermined tolerance limits.

**10.** Method according to one of the preceding claims, **characterized in that** the set of load cell parameters of a load cell to be replaced is read out from a load cell remaining in the system into the control unit before the replacement.

**Revendications**

**1.** Procédé pour remplacer des cellules de pesée dans un dispositif de pesée étalonné comprenant plusieurs cellules de pesée numériques, les cellules de pesée étant reliées avec une unité de commande par l'intermédiaire d'un système de bus, les cellules de pesée numériques mettant à disposition des valeurs de poids sous forme de valeurs de compteurs et chaque cellule de pesée comprenant pour chaque cellule de pesée du dispositif de pesée un jeu de paramètres de cellules de pesée importants pour l'étalonnage qui est consigné dans une mémoire de paramètres, **caractérisé en ce que**,
lors d'un remplacement, au moins une des cellules de pesée présentes jusque là reste dans le dispositif de pesée et **en ce que**, lorsque le remplacement a eu lieu, l'unité de commande centrale détermine sur la base des données de la cellule de pesée remplacée, lesquelles sont fournies à l'unité de commande par la cellule de pesée restée dans le système, un nouveau jeu de paramètres pour la cellule de pesée amenée en remplacement et le mémorise dans les mémoires de paramètres de toutes les cellules de pesée.

**2.** Procédé selon la revendication 1, **caractérisé en ce que** le jeu de paramètres de cellules de pesée importants pour l'étalonnage comprend au moins des données se rapportant à la balance, des données d'ajustement, des facteurs d'angles, une valeur de vérification pour le contrôle, une caractérisation des cellules de pesée et des données d'accès pour la maintenance.

**3.** Procédé selon la revendication 2, **caractérisé en ce que** le jeu de paramètres de cellules de pesée importants pour l'étalonnage comprend en outre des données de la courbe de contrôle du système de cellules de pesée et/ou un code d'identification du convertisseur analogique-digital pour l'attribution du système.

**4.** Procédé selon l'une quelconque des revendications précédentes, **caractérisé en ce que** l'admissibilité dans le dispositif de pesée étalonné de la cellule de pesée amenée en remplacement est contrôlée sur la base de son numéro de série interne.

**5.** Procédé selon l'une quelconque des revendications précédentes, **caractérisé en ce que** la cellule de pesée amenée en remplacement est contrôlée en ce qui concerne sa valeur de compteur dans l'état de non-chargement du dispositif de pesée, un ajustement de la répartition des charges sur la totalité des cellules de pesée étant déclenché si la valeur du compteur ne dévie que d'un maximum de $\pm 10\%$ de la somme de toutes les valeurs des compteurs des cellules de pesée par rapport à la valeur moyenne de toutes les valeurs des compteurs des cellules de pesée du dispositif de pesée.

**6.** Procédé selon la revendication 5, **caractérisé en ce que**, lors d'une étape suivante, le dispositif de pesée étant en état de non-chargement, la cellule de pesée amenée en remplacement est, au cours d'une mesure de la valeur zéro, contrôlée quant au respect d'une tolérance prédéterminée.

**7.** Procédé selon la revendication 6, **caractérisé en ce que**, lors d'une étape qui suit la mesure de la valeur zéro, la cellule de pesée amenée en remplacement est contrôlée quant au respect d'une tolérance prédéterminée dans un premier état de chargement.

**8.** Procédé selon la revendication 7, **caractérisé en ce que**, lors du contrôle en état de chargement, une charge d'au moins 33% de la charge maximale du dispositif de pesée est utilisée.

**9.** Procédé selon la revendication 8, **caractérisé en ce que** dans les cellules de pesée est mémorisée une courbe de contrôle du système de cellules de pesée et **en ce que**, lors du contrôle en état de chargement, ont lieu une comparaison de la valeur obtenue avec la cellule de pesée amenée en remplacement avec la courbe de contrôle de la cellule de pesée remplacée ainsi qu'un contrôle pour déterminer si une concordance est obtenue à l'intérieur de limites de tolérances qui ont été déterminées.

**10.** Procédé selon l'une quelconque des revendications précédentes, **caractérisé en ce que** le jeu de paramètres des cellules de pesée d'une cellule de pesée à remplacer est, avant le remplacement de celle-ci, lu dans une cellule de pesée restant dans le système pour être introduit dans l'unité de commande.